# EUROPÄISCHE PATENTSCHRIFT

(11) **EP 1 763 710 B1**
(45) Veröffentlichungstag und Bekanntmachung des Hinweises auf die Patenterteilung: **07.05.2008**
(21) Anmeldenummer: 05773937.7
(22) Anmeldetag: 04.07.2005
(51) Int. Cl.: G05B 19/418, G05B 19/042, G05B 17/02

(54) **VERFAHREN ZUR SIMULATION EINER TECHNISCHEN ANLAGE**
METHOD FOR SIMULATING A TECHNICAL INSTALLATION
PROCEDE DE SIMULATION D'UNE INSTALLATION TECHNIQUE

(30) Priorität: 07.07.2004 DE 102004033593
(43) Veröffentlichungstag der Anmeldung: 21.03.2007
(73) Patentinhaber: SIEMENS AKTIENGESELLSCHAFT, 80333 München (DE)
(72) Erfinder: BAUEREISS, Jürgen, 91413 Neustadt a. d. Aisch (DE)
(86) Internationale Anmeldenummer: PCT/EP2005/053176
(87) Internationale Veröffentlichungsnummer: WO 2006/003198

(56) Entgegenhaltungen:
- WO-A-01/98871
- DE-A1- 10 018 704
- DE-A1- 10 245 176
- DE-U1- 29 605 847
- HANSELMANN H: "REAL-TIME SIMULATION REPLACES TEST DRIVES" TEST AND MEASUREMENT WORLD, REED BUSINESS INFORMATION, HIGHLANDS RANCH, CO, US, Bd. 16, Nr. 3, 15. Februar 1996 (1996-02-15), Seiten 35-36,38,40, XP000559454 ISSN: 0744-1657

## Beschreibung

Die Erfindung betrifft ein Verfahren zur Simulation einer technischen Anlage, bestehend aus mindestens zwei Komponenten, die über eine reale Schnittstelle miteinander verbunden sind und zwischen denen ein Austausch von Austauschobjekten über die reale Schnittstelle erfolgt, wobei der Austausch der Austauschobjekte zwischen den Komponenten an der realen Schnittstelle in Form von Datenprotokollen protokolliert wird, bei welchem Verfahren ebenfalls Steueranweisungen an die über die reale Schnittstelle verbundenen Komponenten als Steuerungsprotokolle protokolliert werden. Ebenfalls betrifft die Erfindung ein Computerprogrammprodukt, welches das erfindungsgemäße Verfahren enthält.

Technische Anlage im Sinne der vorliegenden Erfindung umfasst jede Anlage, die zum einen aus mindestes zwei Komponenten besteht, die miteinander verbunden sind, und zum anderen ein Austausch von Austauschobjekten über die Verbindungsleitung zwischen den Komponenten stattfindet. Hierbei kann die technische Anlage eine elektrische, eine verfahrens- oder prozesstechnische Anlage sein. Bevorzugt handelt es sich bei der technischen Anlage um ein Spannungsnetzwerk, das durch Stationsleitstellen gesteuert wird. Als Austauschobjekte im Sinne der Erfindung werden insbesondere elektrische Energie, Informationen oder Materialien, wie z.B. Stoffe oder Flüssigkeiten, angesehen. Der Austausch dieser Austauschobjekte in den Verbindungsleitungen wird zwischen mindestens zwei Komponenten an einer die Komponenten verbindenden, realen Schnittstelle gemessen.

Bei der Veränderung der technischen Anlage durch Hinzufügung einer neuen Komponente oder durch Veränderung einer bestehenden Komponente wird diese -nachfolgend genannte - veränderte Komponente nach dem Stand der Technik bisher nach zwei unterschiedlichen Testmethoden überprüft. Entweder findet ein Test der veränderten Komponente in einer speziell konfigurierten Testumgebung außerhalb der technischen Anlage statt, oder die veränderte Komponente wird in einer identischen abgebildeten, zweiten technischen Anlage überprüft. Ziel dieser Tests ist die Konsistenz und Plausibilität der veränderten Komponente innerhalb der technischen Anlage zu testen, ohne den laufenden Betrieb der technischen Anlage zu stören oder zu unterbrechen. Nachteilig ist hierbei jedoch, dass im Falle der Überprüfung der veränderten Komponente in einer Testumgebung ein reelles Abbild der technischen Anlage in der Testumgebung meistens nur unvollständig bzw. nur bezüglich eines ausgewählten Betriebsverhaltens der technischen Anlage vorliegt. Hierdurch entsteht der Nachteil, dass die hinzugefügte Komponente nicht für alle möglichen Betriebszustände der technischen Anlage effektiv getestet werden kann. Die alternative Lösung im Stand der Technik, dass die veränderte Komponente der technischen Anlage hinzugefügt wird, erfordert zwei identische Anlagen, da zumeist eine technische Anlage im Betrieb ist und die zweite technische Anlage ausschließlich zur Testung neuer Komponenten - mit entsprechenden Mehrkosten - genutzt wird.

Die DE 296 05 847 U1 offenbart ein Übungsgerät für eine speicherprogrammierbare Steuerung (SPS). Das Übungsgerät besteht aus einer speicherprogrammierbaren Steuerung, die über eine Eingangs-/Ausgangs-Schnittstelle mit einem Computer verbunden ist. Der Computer enthält eine Projektbibliothek zur Darstellung einer virtuellen Maschine oder Anlage. Durch die speicherprogrammierte Steuerung werden Steuersignale erzeugt und über die Eingangs-/Ausgangs-Schnittstelle an den Computer weitergeleitet und dort visualisiert. Hierdurch kann das Verhalten der technischen Anlage in einer Testumgebung simuliert werden, wobei die durch die speicherprogrammierbare Steuerung erzeugten Steuersignale das Betriebsverhalten der technischen Anlage nur bedingt abbilden.

Die DE 100 18 704 A1 offenbart ein Verfahren und Werkzeug zur Modellierung und/oder Simulation einer technischen Anlage. Kerngedanke der dortigen Erfindung ist, dass mögliche Prozess- und Produktzustände einer Anlage in einer virtuellen Realität (VR) abgebildet und simuliert werden. In einer Simulationsumgebung der virtuellen Realität werden Daten zwischen einem Simulation und einer Applikation über wenigstens eine Schnittstelle ausgetauscht. Die Schnittstelle teilt sich entsprechend der dortigen Erfindung in eine erste Teilschnittstelle zur Übertragung der virtuellen Objekte der technischen Anlage und eine zweite Teilschnittstelle zur Übertragung der Prozessdaten der technischen Anlage. Hierdurch ist eine gleichzeitige Modellierung und /oder Simulation der technischen Anlage als unmittelbare Darstellung in der virtuellen Realität möglich. Nachteilig an dem dortigen Verfahren ist jedoch, dass die virtuelle Abbildung der gesamten Abbildung der gesamten technischen Anlage mit sämtlichen Komponenten und Verbindungen eine speicherplatzintensive und zeitaufwändige Simulation erfordert.

Ausgehend von diesem Stand der Technik ist es Aufgabe der vorliegenden Erfindung, eine einfache Möglichkeit zur Überprüfung von Veränderungen der Komponenten einer technischen Anlage zu schaffen.

Gelöst wird die Aufgabe durch das erfindungsgemäße Verfahren nach Anspruch 1.

Das erfindungsgemäße Verfahren ist dadurch gekennzeichnet, dass auf der Grundlage der Daten und Steuerungsprotokolle eine virtuelle Schnittstelle als Abbild der realen Schnittstelle erzeugt wird. Insbesondere die zeitliche Abfolge der protokollierten Steuerungsanweisungen in den Steuerungsprotokollen und die Reaktion des protokollierten Austauschs der Austauschobjekte als Datenprotokolle einer Komponente ermöglicht es, das an der realen Schnittstelle protokollierte Austauschverhalten der Komponente in Abhängigkeit der Steueranweisungen zu erfassen. Auf der Grundlage dieser Daten- und Steuerungsprotokolle kann daher eine virtuelle Schnittstelle als Abbild der realen Schnittstelle simuliert werden. Nachfolgend werden im Rahmen des erfindungsgemäßen Verfahrens die Komponenten der technische Anlage nur bezüglich des Zusammenhanges zwischen Steueranweisungen und dem Austausch von Austauschobjekten über die verbindende reale Schnittstelle repräsentiert. Damit werden als Simulationsabbild der realen technischen Anlage nach dem erfindungsgemäßen Verfahren nicht alle Komponenten und deren Verbindungsschnittstellen abgebildet, sondern nur die verbindenden Schnittstellen unter Berücksichtigung der Daten- und Steuerungsprotokolle. Die Komponenten der technischen Anlage werden damit nur bezüglich der Abbilder der realen Schnittstelle mittels der virtuellen Schnittstellen implizit simuliert. Dies führt zu einer erheblichen Vereinfachung des Simulationsaufwandes, da nicht die gesamte technische Anlage virtuell abgebildet werden muss. Weiterhin ist durch die Protokollierung des realen Austausches der Austauschobjekte über die reale Schnittstelle das Verhalten zwischen den Komponenten realistisch und umfangreich abgebildet. Gegenüber einer definierten Testumgebung hat das erfindungsgemäße Verfahren den Vorteil, dass das Betriebsverhalten der technischen Anlage aufgrund realer Prozess- und/oder Betriebszustände der technischen Anlage erzeugt wird und nicht ausschließlich aufgrund von Testdaten in einer Testumgebung. Vorzugsweise werden die bezüglich einer realen Schnittstelle protokollierten Datenprotokolle in einem zugeordneten Schnittstellenprotokoll abgelegt. In dem Schnittstellenprotokoll werden weiterhin die Steueranweisungen der Komponenten, die über die jeweilige reale Schnittstelle miteinander verbunden sind, abgelegt. Hierdurch wird in einem einzigen Protokoll das Input-Output-Verhalten der miteinander über eine reale Schnittstelle verbundenen Komponenten vor allem zeitlich erfasst und dokumentiert.

Vorteilhafterweise werden bei einer Veränderung der Konfiguration und/oder des Betriebszustandes mindestens einer Komponente der technischen Anlage, die mit den veränderten Komponenten verbundene reale Schnittstelle als virtuelle Schnittstelle abgebildet werden. Die virtuelle Schnittstelle simuliert damit Veränderungen der Konfiguration und/oder des Betriebszustandes der veränderten Komponenten. Der damit verbundene, veränderte Austausch von Austauschobjekten über die zugeordnete virtuelle Schnittstelle wird dann zur Überprüfung der Konsistenz der veränderten Komponente genutzt. Konsistenz im Sinne der vorliegenden Erfindung umfasst die Überprüfung der Anlagenkonfiguration und/oder der möglichen Betriebszustände einer veränderten technischen Anlage hinsichtlich ihrer Plausibilität und Konsistenz. Die Konsistenzprüfung gewährleistet damit, dass zum einen technisch nicht mögliche bzw. nicht erwünschte Anlagenkonfigurationen aufgrund der Veränderung einer Komponente entstehen. Weiterhin werden im Rahmen der Konsistenzprüfung unerwünschte bzw. sicherheitskritische Prozesszustände einer konsistenten technischen Anlage festgesellt.

In einer bevorzugten Ausführungsform des erfindungsgemäßen Verfahrens werden die Daten- und/oder Steuerungsprotokolle der realen Schnittstelle aufgrund des Austausches von realen und/oder virtuellen Austauschobjekten erzeugt. Weiterhin ist vorteilhaft, dass die Daten- und/oder Steuerungsprotokolle als Dateien erzeugt und in einer Datenbank abgelegt werden.

Vorzugsweise werden die Daten- und/oder Steuerungsprotokolle in zeitlichen Intervallen an der realen Schnittstelle wiederholt erzeugt. Weiterhin werden die Daten- und/oder Steuerungsprotokolle der jeweiligen realen Schnittstellen miteinander verglichen und auftretende Abweichungen registriert und weiterverarbeitet. Durch die Überwachung ist gewährleistet, dass eine Veränderung der realen Schnittstelle bzw. der hiermit verbundenen Verbindungsleitung zwischen zwei Komponenten überwacht und bei einer festgestellten Abweichung registriert wird. Die Registrierung kann dabei in Form einer Anzeige zu einem Bediener bzw. als Schaltsignal innerhalb der technischen Anlage generiert werden.

Weiterhin ist erfindungsgemäß vorgesehen, dass mittels ausgewählter Steueranweisungen die Komponenten der technischen Anlage bedient und der hierdurch initiierte Aufbau der Austauschobjekte über die reale Schnittstelle als Daten- und/oder Steuerungsprotokolle protokolliert wird. Mittels dieser ausgewählten Steueranweisungen kann ein definierter Austausch von Austauschobjekten über eine reale Schnittstelle initiiert und das entsprechende Ergebnis in einem Datenprotokoll protokolliert werden. Durch diese definierte Steuerung der Komponenten in Verbindung mit der Protokollierung des Austausches der Austauschobjekte kann eine automatische Überprüfung der Komponenten der technischen Anlage gewährleistet werden. Insbesondere in automatisierten technischen Anlagen wird mittels des erfindungsgemäßen Verfahrens eine permanente Überprüfung der technischen Anlage bereitgestellt.

Eine bevorzugte Ausführungsform des erfindungsgemäßen Verfahrens besteht darin, dass die technische Anlage ein Energieversorgungsnetz ist, dass mittels Stationsleitstellen gesteuert wird.

Weiterhin ist erfindungsgemäß ein Computerprodukt, wobei das Computerprodukt zur Simulation einer technischen Anlage auf einem computerlesbaren Medium gespeichert ist und Instruktionen aufweist, die betreibbar sind, um folgende Schritte durchzuführen: Protokollierung des Austausches von Austauschobjekten zwischen den Komponenten einer technischen Anlage über eine reelle Schnittstelle in Form von Datenprotokollen, wobei ebenfalls die Steueranweisungen der über die reale Schnittstelle verbundenen Komponenten als Steuerungsprotokolle protokolliert werden; Erzeugung einer virtuellen Schnittstelle auf der Grundlage der Daten- und Steuerungsprotokolle als Abbild der realen Schnittstelle; Simulation der Komponenten der technischen Anlage nur bezüglich ihres Austausches von Austauschobjekten über die virtuelle Schnittstelle.

Weitere vorteilhafte Maßnahmen sind in den übrigen Unteransprüchen beschrieben; die Erfindung wird anhand von Ausführungsbeispielen und den nachfolgenden Figuren näher beschrieben. Es zeigt:
- FIG.1: Flussdiagramm des erfindungsgemäßen Verfahrens;
- FIG.2: schematische Darstellung einer Anordnung zur Durchführung des erfindungsgemäßen Verfahrens.

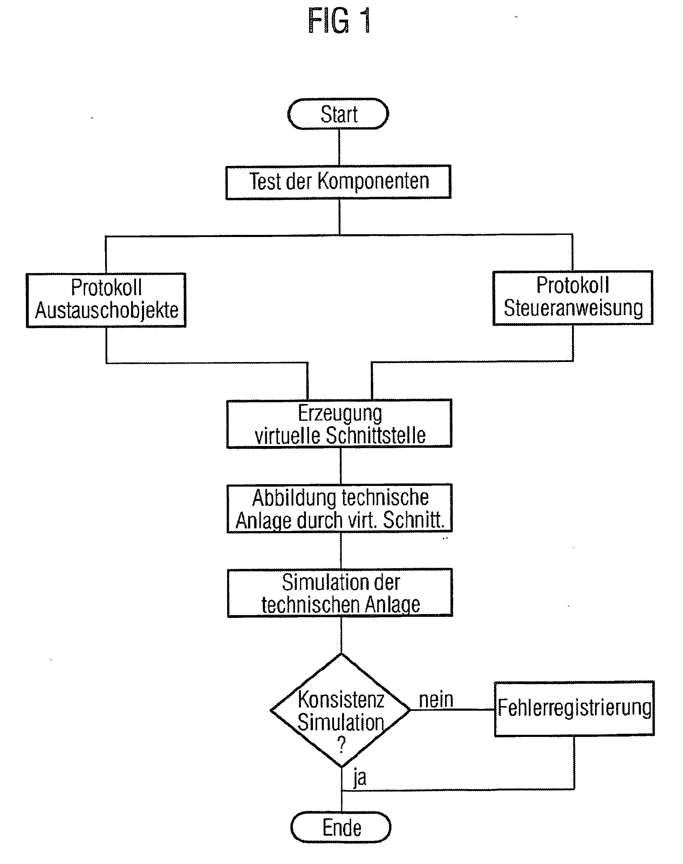

Das in der FIG. 1 gezeigte Ablaufdiagramm des erfindungsgemäßen Verfahrens wird im gewählten Beispiel aufgrund eines Testaufrufes von ausgewählten Steueranweisungen für mindestens eine Komponente initialisiert. Die an einer realen Schnittstelle protokollierten Datenprotokolle und die Steueranweisungen an die mit der realen Schnittstelle verbundenen Komponenten in Form von Steuerungsprotokollen werden in einer Simulationsumgebung zur Erzeugung einer virtuellen Schnittstelle als Abbild der realen Schnittstelle benutzt. Anschließend wird die gesamte technische Anlage mittels der erzeugten virtuellen Schnittstellen als Modell umgesetzt. Hierbei ist es möglich, dass entweder jeweils zwei miteinander verbundene Komponenten mittels einer virtuellen Schnittstelle simuliert werden. Andererseits können mehrere miteinander verbundene Komponenten durch eine virtuelle Schnittstelle repräsentiert werden. Das so erzeugte Abbild der technischen Anlage dient anschließend zur Simulation von veränderten Konfigurationen und Betriebs- und/oder Prozessabläufen innerhalb der technischen Anlage. Während der laufenden Simulation des Betriebsverhaltens der technischen Anlage wird die Konsistenz der Simulation laufend überprüft und bei vorliegender Inkonsistenz der hiermit verbundene Fehler detektiert und registriert.

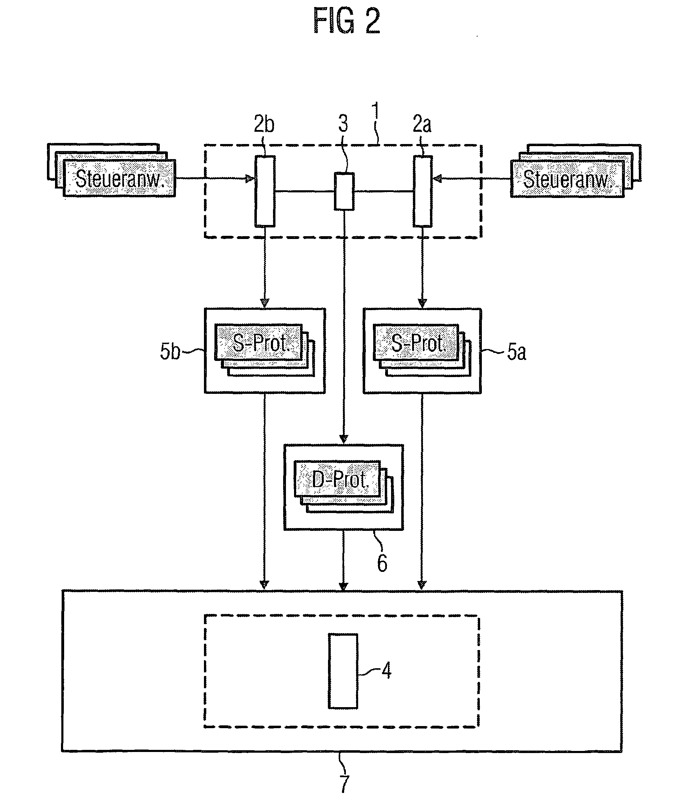

Die in FIG. 2 schematische Darstellung einer Anordnung zur Durchführung des erfindungsgemäßen Verfahrens besteht aus zwei Komponenten 2a, 2b einer technischen Anlage 1, die mittels einer realen Schnittstelle 3 verbunden sind. Die Komponenten 2a, 2b werden durch Steueranweisungen bedient und der damit verbundene Austausch der Austauschobjekte zwischen den Komponenten 2a, 2b initiiert und konfiguriert. Der an der realen Schnittstelle 3 registriert Austausch der Austauschobjekte in Form von Datenprotokollen wird in einer Datenbank abgespeichert. Ebenfalls werden die Steuerungsprotokolle auf der Grundlage der Steueranweisungen an die Komponenten 2a, 2b in einer Datenbank 5a, 5b abgelegt und verwaltet. In einer Simulationsumgebung 7 wird auf der Grundlage der in den Datenbanken 5a, 5b sechs vorliegenden Protokolle eine virtuelle Schnittstelle 4 erzeugt und ein Steuerungsverhalten der realen Schnittstelle 3 hierdurch simuliert.

Die Steueranweisungen der Komponenten 2a, 2b werden entweder durch äußere Einflüsse erzeugt und stellen den Betrieb der technischen Anlage 1. Ebenfalls können ausgewählte Steueranweisungen zur Erzeugung eines definierten Austauschs von Austauschobjekten über die reale Schnittstelle 3 genutzt werden. Dies wird durch die in den Datenbanken 5a, 5b, 6 abgelegten Protokolle des Austauschverhaltens der Komponenten 2a, 2b gewährleistet.

## Patentansprüche

1. Verfahren zur Simulation einer technischen Anlage (1), bestehend aus mindestens zwei Komponenten, die über eine reale Schnittstelle (3) miteinander verbunden sind und zwischen denen ein Austausch von Austauschobjekten über die reale Schnittstelle (3) erfolgt, wobei der Austausch der Austauschobjekte zwischen den Komponenten (2a,2b) an der realen Schnittstelle (3) in Form von Datenprotokollen protokolliert wird, bei welchem Verfahren ebenfalls Steueranweisungen an die über die reale Schnittstelle (3) verbundenen Komponenten als Steuerungsprotokolle protokolliert werden, **dadurch gekennzeichnet, dass** auf der Grundlage der Daten- und Steuerungsprotokolle eine virtuelle Schnittstelle als Abbild der realen Schnittstelle (3) erzeugt wird, und nachfolgend die Komponenten (2a,2b) der technischen Anlage (1) nur bezüglich des Zusammenhangs zwischen Steueranweisungen und dem Austausch von Austauschobjekten über die verbindende reale Schnittstelle (3) repräsentiert und mittels der virtuellen Schnittstelle (4) damit simuliert werden.

2. Verfahren nach Anspruch 1, **dadurch gekennzeichnet, dass** die zu einer realen Schnittstelle (3) zugehörigen Daten- und Steuerungsprotokolle in Schnittstellenprotokolle zusammengefasst werden.

3. Verfahren nach einem der Ansprüche 1 oder 2, **dadurch gekennzeichnet, dass** bei der Veränderung der Konfiguration und/oder des Betriebszustandes mindestens einer Komponente (2a) der technischen Anlage, die mit den veränderten Komponenten (2a) verbundene reale Schnittstelle (3) als virtuelle Schnittstelle (4) abgebildet und der mit Veränderung der Konfiguration und/oder des Betriebszustandes der Komponente (2a) verbundene, veränderte Austausch von Austauschobjekten über die virtuelle Schnittstelle (4) simuliert und bezüglich ihrer Konsistenz geprüft wird.

4. Verfahren nach einem der Ansprüche 1 bis 3,
**dadurch gekennzeichnet, dass** die Daten- und/oder Steuerungsprotokolle der realen Schnittstelle (3) aufgrund des Austausches von realen und/oder virtuellen Austauschobjekten erzeugt werden.

5. Verfahren nach einem der Ansprüche 1 bis 4,
**dadurch gekennzeichnet, dass** die Daten- und/oder Steuerungsprotokolle als Dateien erzeugt und in einer Datenbank (5a,5b,6) abgelegt werden.

6. Verfahren nach einem der vorhergehenden Ansprüche,
**dadurch gekennzeichnet, dass** die Daten- und/oder Steuerungsprotokolle in zeitlichen Intervallen an der realen Schnittstelle (3) neu erzeugt werden.

7. Verfahren nach Anspruch 6,
**dadurch gekennzeichnet, dass** die Daten- und/oder Steuerungsprotokolle der jeweiligen realen Schnittstelle (3) miteinander verglichen und auftretende Abweichungen registriert und weiterverarbeitet werden.

8. Verfahren nach einem der vorhergehenden Ansprüche, **dadurch gekennzeichnet, dass** mittels ausgewählter Steueranweisungen die Komponenten (2a,2b) der technischen Anlage (1) bedient und der hierdurch initiierte Austausch der Austauschobjekte über die reale Schnittstelle (3) als Daten- und/oder Steuerungsprotokolle protokolliert wird.

9. Verfahren nach einem der vorhergehenden Ansprüche, **dadurch gekennzeichnet, dass** die technische Anlage (1) ein E-nergieversorgungsnetz ist, das mittels Stationsleitstellen gesteuert wird.

10. Computerprogrammprodukt zur Simulation einer technischen Anlage, das auf einem computerlesbaren Medium gespeichert ist und Instruktionen aufweist, die betreibbar sind, um folgende Schritte durchzuführen:
Protokollierung des Austauschs von Austauschobjekten zwischen den Komponenten einer technischen Anlage (1) über eine reale Schnittstelle (3) in Form von Datenprotokollen, wobei ebenfalls die Steueranweisungen der über die reale Schnittstelle (3) verbundenen Komponenten (2a,2b) als Steuerungsprotokolle protokolliert werden;
Erzeugung einer virtuellen Schnittstelle (4) auf der Grundlage der Daten- und Steuerungsprotokolle als Abbild der realen Schnittstelle (3);
Simulation der Komponenten (2a,2b) der technischen Anlage nur bezüglich ihres Austausches von Austauschobjekten über die virtuelle Schnittstelle (4).

11. Computerprogrammprodukt nach Anspruch 10 zur Durchführung der Schritte nach einem der Ansprüche 2 bis 9.

## Claims

1. Method for simulating a technical installation (1), comprising at least two components which are connected to one another by means of a real interface (3) and between which interchange objects are interchanged via the real interface (3), the interchange of the interchange objects between the components (2a, 2b) being logged on the real interface (3) in the form of data logs, which method likewise involves control instructions to the components connected by means of the real interface (3) being logged as control logs, **characterized in that** the data and control logs are taken as a basis for producing a virtual interface as a map of the real interface (3), and subsequently the components (2a, 2b) of the technical installation (1) are represented only in respect of the relationship between control instructions and the interchange of interchange objects via the connecting real interface (3) and simulated thus by means of the virtual interface (4).

2. Method according to claim 1, **characterized in that** the data and control logs associated with a real interface (3) are combined into interface logs.

3. Method according to one of claims 1 and 2, **characterized in that** when altering the configuration and/or the operating state of at least one component (2a) of the technical installation, the real interface (3) connected to the altered components (2a) is mapped as a virtual interface (4) and the altered interchange of interchange objects which is connected to alteration of the configuration and/or of the operating state of the component (2a) is simulated by means of the virtual interface (4) and has its consistency checked.

4. Method according to one of claims 1 to 3,
**characterized in that** the data and/or control logs of the real interface (3) are produced on the basis of the interchange of real and/or virtual interchange objects.

5. Method according to one of claims 1 to 4,
**characterized in that** the data and/or control logs are produced as files and are stored in a database (5a, 5b, 6).

6. Method according to one of the preceding claims,
**characterized in that** the data and/or control logs are produced afresh on the real interface (3) at intervals of time.

7. Method according to claim 6,
**characterized in that** the data and/or control logs of the respective real interface (3) are compared with one another, and discrepancies which arise are recorded and processed further.

8. Method according to one of the preceding claims,
**characterized in that** selected control instructions are used to operate the components (2a, 2b) of the technical installation (1), and the accordingly initiated interchange of the interchange objects via the real interface (3) is logged as data and/or control logs.

9. Method according to one of the preceding claims,
**characterized in that** the technical installation (1) is a power supply network which is controlled by means of station control centers.

10. Computer program product for simulating a technical installation which is stored on a computer-readable medium and has instructions which can be run in order to perform the following steps:
logging of the interchange of interchange objects between the components of a technical installation (1) via a real interface (3) in the form of data logs, with the control instructions for the components (2a, 2b) connected by means of the real interface (3) likewise being logged as control logs;
production of a virtual interface (4) on the basis of the data and control logs as a map of the real interface (3);
simulation of the components (2a, 2b) of the technical installation only in respect of their interchange of interchange objects via the virtual interface (4).

11. Computer program product according to claim 10 for performing the steps according to one of claims 2 to 9.

## Revendications

1. Procédé de simulation d'une installation technique (1), constituée d'au moins deux composants qui sont reliés par l'intermédiaire d'une interface réelle (3) et entre lesquels s'effectue un échange d'objets d'échange par l'intermédiaire de l'interface réelle (3), l'échange des objets d'échange entre les composants (2a, 2b) étant consigné dans l'interface réelle (3) sous la forme de protocoles de données, procédé dans lequel on consigne également sous forme de protocoles de commande des instructions de commande adressées aux composants reliés par l'intermédiaire de l'interface réelle (3), **caractérisé par le fait que**, sur la base des protocoles de données et de commande, on produit une interface virtuelle comme image de l'interface réelle (3) puis on ne représente les composants (2a, 2b) de l'installation technique (1) que par rapport à la relation entre des instructions de commande et l'échange d'objets d'échange par l'intermédiaire de l'interface réelle (3) de liaison et on les simule ainsi au moyen de l'interface virtuelle (4).

2. Procédé selon la revendication 1, **caractérisé par le fait que** l'on réunit dans des protocoles d'interface les protocoles de données et de commande associés à une interface réelle (3).

3. Procédé selon l'une des revendications 1 ou 2, **caractérisé par le fait que**, lors de la modification de la configuration et/ou de l'état de fonctionnement d'au moins un composant (2a) de l'installation technique, on reproduit comme interface virtuelle (4) l'interface réelle (3) reliée au composant modifié (2a), on simule l'échange modifié d'objets d'échange, lié à la modification de la configuration et/ou de l'état de fonctionnement du composant (2a), par l'intermédiaire de l'interface virtuelle (4) et on vérifie sa cohérence.

4. Procédé selon l'une des revendications 1 à 3, **caractérisé par le fait que** l'on produit les protocoles de données et/ou de commande de l'interface réelle (3) sur la base de l'échange d'objets d'échange réels et/ou virtuels.

5. Procédé selon l'une des revendications 1 à 4, **caractérisé par le fait que** l'on produit les protocoles de données et/ou de commande sous forme de fichiers et on les enregistre dans une base de données (5a, 5b, 6).

6. Procédé selon l'une des revendications précédentes, **caractérisé par le fait que** l'on produit à nouveau les protocoles de données et/ou de commande dans l'interface réelle (3) suivant des intervalles de temps.

7. Procédé selon la revendication 6, **caractérisé par le fait que** l'on compare entre eux les protocoles de données et/ou de commande de l'interface réelle (3) respective et l'on enregistre et traite ensuite d'éventuels écarts qui sont apparus.

8. Procédé selon l'une des revendications précédentes, **caractérisé par le fait que**, au moyen d'instructions de commande sélectionnées, on commande les composants (2a, 2b) de l'installation technique (1) et on consigne l'échange ainsi déclenché des objets d'échange par l'intermédiaire de l'interface réelle (3) comme protocoles de données et/ou de commande.

9. Procédé selon l'une des revendications précédentes, **caractérisé par le fait que** l'installation technique (1) est un réseau d'alimentation en énergie qui est commandé au moyen de postes de commande.

10. Programme informatique destiné à la simulation d'une installation technique, mémorisé sur un support lisible par un ordinateur et comportant des instructions qui peuvent être exécutées pour :
consigner l'échange d'objets d'échange entre les composants d'une installation technique (1) par l'intermédiaire d'une interface réelle (3) sous la forme de protocoles de données, les instructions de commande des composants (2a, 2b) reliés par l'intermédiaire de l'interface réelle (3) étant également consignées sous la forme de protocoles de commande ;
produire une interface virtuelle (4) comme image de l'interface réelle (3) sur la base des protocoles de données et de commande ;
simuler les composants (2a, 2b) de l'installation technique seulement par rapport à leur échange d'objets d'échange par l'intermédiaire de l'interface virtuelle (4).

11. Programme informatique selon la revendication 10 pour la mise en oeuvre des étapes selon l'une des revendications 2 à 9.
